# FASCICULE DE BREVET EUROPEEN

(11) **EP 0 410 516 B1**
(45) Date de publication et mention de la délivrance du brevet: **12.06.1996**
(21) Numéro de dépôt: 90201961.1
(22) Date de dépôt: 19.07.1990
(51) Int. Cl.: H04L 9/06

(54) **Procédé de traitement d'une permutation irrégulière de données protégées par chiffrement**
Verfahren zur Ausarbeitung einer unregelmässigen Vertauschung von mittels Verschlüsselung geschützten Daten
Processing method for an irregular permutation of data protected by encryption

(30) Priorité: 25.07.1989 FR 8910003
(43) Date de publication de la demande: 30.01.1991
(73) Titulaire: PHILIPS CARTES ET SYSTEMES, 75013 Paris (FR); Philips Electronics N.V., 5621 BA Eindhoven (NL)
(72) Inventeur: Delaporte, Xavier, F-75008 Paris (FR); Leterrier, Benoît, F-75008 Paris (FR)
(74) Mandataire: Chaffraix, Jean

(56) Documents cités:
- US-A- 4 255 811
- IBM TECHNICAL DISCLOSURE BULLETIN, vol. 29, no. 12, mai 1987, pages 5594-5595, New York, US; "Software data encryption standard"

## Description

La présente invention concerne un procédé de traitement d'une permutation irrégulière d'éléments binaires d'entrée organisés en lignes dites lignes d'entrée, cette permutation irrégulière étant définie par une table de correspondance, organisée en lignes, qui indique l'emplacement final de chacun de ces éléments binaires.

Le procédé selon l'invention trouve de nombreuses applications, notamment pour le traitement des permutations irrégulières de données qui sont protégées par chiffrement.

Un tel traitement de données binaires protégées par chiffrement appliqué aux cartes à microcircuit est décrit dans la publication : "Federal Information Processing Standards Publication" (FIPS PUB 46) du 15 janvier 1977, du Bureau National des Standards du Ministère du Commerce américain. Cette publication propose un traitement standard des données d'entrée ainsi que la clé secrète et notamment des permutations à réaliser sur celle-ci à partir de tables de correspondance. Lorsqu'un tel traitement est appliqué aux données utilisées dans une carte à microcircuit, celui-ci doit être le plus rapide et également le plus compact possible, la taille de code admissible dans une carte à microcircuit étant des plus limitées. Or l'opération de permutation sur la clé est une étape coûteuse en temps de traitement et en taille de code. Pour traiter une permutation irrégulière, il existe habituellement deux procédés. Le premier consiste à traiter chaque permutation d'élément binaire (bit) un à un, alors que le second consiste à lire dans la table de correspondance, l'adresse de destination de chaque bit.

Le premier procédé est lent mais relativement peu coûteux en taille de code, tandis que le second est assez rapide mais coûteux en taille de code.

Le système de chiffrement proposé dans la publication précitée utilise deux permutations irrégulières appelées P et PC2.

L'article "Software data encryption standard" publié dans la revue "IBM Technical Disclosure Bulletin" volume 29, n°12 de mai 1987 propose une solution pour éviter le calcul de la permutation P en utilisant une table pré-déterminée. La permutation P est appliquée sur un mot formé de 8 blocs de 4 éléments binaires, chacun de ces blocs étant l'image d'un bloc de 6 éléments binaires par l'une des 8 fonctions S0 à S7. La table pré-déterminée comporte donc 512 lignes, 64 lignes étant attribuées à chaque fonction S0 à S7. Chacune de ces lignes comporte elle-même 32 éléments binaires dont les seuls éléments binaires significatifs sont les 4 éléments binaires permettant de coder le mot d'entrée sur lequel est appliquée la permutation P.

L'application d'un tel procédé à une permutation quelconque (en substituant la fonction Identité aux transformations de compression Si) serait coûteuse du point de vue de la taille de code nécessaire.

Le but de la présente invention est donc de proposer un procédé de traitement d'une permutation irrégulière quelconque qui ne présente pas les inconvénients des procédés connus. Elle permet d'optimiser cette opération en accroissant très sensiblement la vitesse de traitement tout en nécessitant une taille de code limitée.

Pour cela, le procédé de traitement d'une permutation irrégulière du genre mentionné dans le préambule est remarquable en ce qu'il consiste :
- à associer, préalablement, un ensemble de masques à chaque ligne de la table de correspondance, chacun de ces masques correspondant à une ligne d'entrée et permettant d'en extraire les éléments binaires qui interviennent dans la ligne de la table de correspondance à laquelle il est associé,
- à effectuer, pour chaque ligne de la table de correspondance, une permutation élémentaire sur les éléments binaires obtenus par application de chaque masque, afin de les placer aux emplacements prédéfinis par la table de correspondance, la ligne de la table de correspondance étant alors reconstituée en regroupant les éléments binaires obtenus par application de chaque permutation élémentaire.

Ainsi, un tel procédé autorise à la réalisation de permutations irrégulières et donc totalement asymétriques sur un grand nombre d'éléments binaires en évitant le traitement bit à bit coûteux en temps et en taille de code. En effet, ce concept, qui combine le repérage des éléments binaires adéquats, l'utilisation d'un système de masquage puis de permutations élémentaires, permet d'effectuer de manière optimale des regroupements et donc des permutations par deux et même par trois éléments binaires, et de bénéficier ainsi d'une réduction très sensible du temps de traitement sur l'ensemble de la permutation.

Ce type de procédé est particulièrement bien adapté pour être avantageusement appliqué au traitement de données protégées par chiffrement des cartes à microcircuit utilisant le système DES, tel que décrit dans la publication précitée (FIPS PUB 46). Ainsi, selon ce système, la clé après rotation d'un bloc de 56 bits est comprimée à 48 bits ainsi que permutée à partir d'une table de correspondance appelée, selon le standard : table PC2. Cette opération est considérée comme la plus coûteuse du système DES en ce qui concerne le temps de traitement ainsi que la taille du code.

L'application du procédé selon l'invention, si elle ne permet pas de réduire notablement la taille du code par rapport aux procédés classiquement utilisés, permet cependant de réduire très sensiblement le temps de traitement (de l'ordre de 50%).

Ainsi, pour chaque ligne de la table PC2, le procédé consiste à repérer les bits appartenant au premier octet de la clé, puis au second et ainsi de suite. Ce repérage permet alors d'établir les masques correspondants afin d'extraire les bits concernés, la suite du procédé consistant à permuter les bits obtenus de façon à ce qu'ils correspondent bien aux emplacements définis par la table PC2.

Sur les lignes de la table PC2, seuls les 6 bits situés à droite de l'octet résultant sont significatifs. Par exemple, la première ligne de la table PC2 se décompose comme suit :

| | | | | | | |
|---|---|---|---|---|---|---|
| numéro de bit : | 14 | 17 | 11 | 24 | 1 | 5 |
| numéro d'octet dans la clé : | (1) | (2) | (1) | (2) | (0) | (0) |

Pour construire cette ligne de la table PC2, chaque octet de la clé est pointé séquentiellement alors que les bits intéressants doivent être récupérés grâce au système de masquage.

On voit selon cet exemple que seuls les bits 1 et 5 intéressent l'octet 0 de la clé lorsque celui-ci est pointé, le masque correspondant est ainsi défini :

| | | | | | | | | |
|---|---|---|---|---|---|---|---|---|
| Entrée de la table PC2 : | a₁ | 0 | 0 | 0 | a₂ | 0 | 0 | 0 |
| Sortie de la table PC2 : | X | X | 0 | 0 | 0 | 0 | a₁ | a₂ |

A la sortie de la table PC2, seuls les 6 bits situés à droite sont significatifs. Les deux premiers situés à gauche étant non significatifs.

Cette opération est réitérée 8 fois de façon à traiter tous les bits et, selon le procédé appliqué, un certain nombre de permutations sont obtenues pour le traitement de la clé. IL suffit alors d'effectuer un OU logique entre chaque octet résultant pour un même octet donné de la clé. Le résultat final est codé sur 8 mots de 6 bits, en fait sur 8 octets, pour lesquels seuls 6 bits cadrés à droite sont conserves.

La définition des permutations est ainsi faite. Les octets (O) de la clé sont numérotés de 0 à 7. Les bits à l'intérieur de chaque octet sont numérotés de 1 à 8 et de gauche à droite. Ainsi sont obtenues 15 permutations pour le traitement de la partie basse de la clé (de O₀ à O₃) et 14 permutations pour le traitement de la partie haute de la clé (de O₄ à O₇), soit au total 29 permutations pour l'ensemble de la clé.

Le traitement de ces 29 permutations de manière linéaire est coûteux en taille de code, mais est assurément le procédé le plus rapide. Ce traitement est effectué à l'aide de microprocesseurs 8 bits tels que le 6805 de chez Motorola ou le 8048 de chez Intel. Le traitement le plus rapide a été obtenu lors de l'utilisation du microprocesseur 8048.

De manière spécifique, le procédé de traitement d'une permutation irrégulière selon l'invention, appliqué au traitement de données protégées par chiffrement des cartes à microcircuit utilisant le système DES est remarquable en ce qu'il est effectué selon les étapes suivantes et ceci pour chaque octet de la clé :
a) pointage sur l'octet de rang i de la clé,
b) chargement de la valeur du masque dans l'accumulateur,
c) masquage entre l'accumulateur et le contenu de l'octet,
d) permutation de l'octet,
e) exécution d'un OU logique avec le résultat précédent,
f) rangement du résultat dans un registre de stockage temporaire.

Un tel procédé peut s'appliquer bien entendu à toute permutation non régulière, le principe étant qu'il est plus facile de réaliser plusieurs permutations sur un, deux ou trois bits plutôt que d'en réaliser une seule sur un grand nombre de bits. Le procédé ne permet pas d'obtenir un gain en taille de code très notable, mais de réduire très sensiblement le temps de traitement de la permutation.

## Revendications

1. Procédé de traitement d'une permutation irrégulière d'éléments binaires d'entrée organisés en lignes dites lignes d'entrée, cette permutation irrégulière étant définie par une table de correspondance, organisée en lignes, qui indique l'emplacement final de chacun de ces éléments binaires,
caractérisé en ce qu'il consiste :
- à associer, préalablement, un ensemble de masques à chaque ligne de la table de correspondance, chacun de ces masques correspondant à une ligne d'entrée et permettant d'en extraire les éléments binaires qui interviennent dans la ligne de la table de correspondance à laquelle il est associé,
- à effectuer, pour chaque ligne de la table de correspondance, une permutation élémentaire sur les éléments binaires obtenus par application de chaque masque, afin de les placer aux emplacements prédéfinis par la table de correspondance, la ligne de la table de correspondance étant alors reconstituée en regroupant les éléments binaires obtenus par application de chaque permutation élémentaire.

2. Procédé de traitement d'une permutation irrégulière selon la revendication 1, caractérisé en ce qu'il est effectué selon les étapes suivantes et ceci pour chaque ligne d'entrée :
a) pointage sur la ligne d'entrée de rang i,
b) chargement de la valeur du masque dans un accumulateur,
c) masquage entre l'accumulateur et le contenu de la ligne d'entrée pointée,
d) permutation des éléments binaires fournis par le masquage,
e) exécution d'un OU logique avec le résultat précédent,
f) rangement du résultat dans un registre de stockage temporaire.

3. Procédé de chiffrement de données binaires utilisant une extraction d'une clé secrète sur laquelle est effectuée une permutation irrégulière à partir d'une table de correspondance, caractérisé en ce que la permutation irrégulièrement est effectuée d'après un procédé selon l'une des revendications 1 ou 2.

4. Utilisation d'une carte à microcircuit protégé par chiffrement utilisant le système DES, qui comporte un ensemble à microprocesseur pourvu d'une mémoire morte contenant des instructions permettant de réaliser une permutation d'éléments binaires pour la mise en oeuvre du procédé de chiffrement selon la revendication 3.

## Patentansprüche

1. Verfahren zur Verarbeitung einer unregelmäßigen Permutation von in Zeilen organisierten Eingangsbinärelementen, als Eingabezeilen bezeichnet, wobei diese unregelmäßige Permutation durch eine in Zeilen organisierte Entsprechungstabelle, die die endgültige Position jedes dieser Binärelemente angibt, definiert wird,
dadurch gekennzeichnet, daß es aus folgendem besteht:
- zuvoriges Zuweisen eines Satzes von Masken zu jeder Zeile der Entsprechungstabelle, wobei jede dieser Masken einer Eingabezeile entspricht und es ermöglicht, daraus die Binärelemente zu entnehmen, die in der Zeile der Entsprechungstabelle auftreten, der er zugewiesen ist,
- Ausführen, für jede Zeile der Entsprechungstabelle, einer elementaren Permutation auf den durch Anwendung jeder Maske erhaltenen Binärelementen, um sie in den zuvor durch die Entsprechungstabelle definierten Positionen zu plazieren, wobei die Zeile der Entsprechungstabelle dann durch Umgruppierung der durch Anwendung jeder elementaren Permutation erhaltenen Binärelemente zurückgewonnen wird.

2. Verfahren zur Verarbeitung einer unregelmäßigen Permutation nach Anspruch 1, dadurch gekennzeichnet, daß es gemäß den folgenden Schritten ausgeführt wird und zwar für jede Eingabezeile:
a) Anweisen der Eingabezeile vom Rang i
b) Laden des Wertes der Maske in einen Akkumulator
c) Maskieren zwischen dem Akkumulator und dem Inhalt der angewiesenen Eingabezeile,
d) Permutation der durch das Maskieren gelieferten Binärelemente,
e) Ausführen einer ODER-Logikfunktion mit dem vorhergehenden Ergebnis,
f) Speichern des Ergebnisses in einem Zwischenspeicherregister.

3. Verfahren zur Verschlüsselung binärer Daten unter Verwendung eines Auslesens eines geheimen Schlüssels, auf dem eine unregelmäßige Permutation auf Basis einer Entsprechungstabelle ausgeführt worden ist, dadurch gekennzeichnet, daß die unregelmäßige Permutation entsprechend einem Verfahren nach einem der Ansprüche 1 oder 2 ausgeführt wird.

4. Verwendung einer durch Verschlüsselung geschützten Chipkarte unter Verwendung des DES-Systems, die eine mit einem Festspeicher versehene Mikroprozessoranordnung umfaßt, der Befehle enthält, die die Realisierung einer Permutation von Binärelementen ermöglichen, um das Verschlüsselungsverfahren nach Anspruch 3 auszuführen.

## Claims

1. A method for processing an irregular permutation of input bits organised in lines, referred to as input lines, said irregular permutation being defined by a correspondence table, organised in lines which indicates the final position of each of said bits, characterized in that it consists of:
- associating, in advance, a set of masks with each line of the correspondence table, each of said masks corresponding to an input line and enabling the extraction therefrom of the bits occurring in the line of the correspondence table with which it is associated,
- executing, for each line of the correspondence table, an elementary permutation on the bits obtained by application of each mask in order to place them in the positions predefined by the correspondence table, the line of the correspondence table then being reconstructed by re-arranging the bits obtained by application of each elementary permutation.

2. A method for processing an irregular permutation as claimed in Claim 1, characterized in that it is performed in the following steps, that is to say for each input line:
a) indicating the input line of rank i
b) loading the value of the mask into an accumulator
c) masking between the accumulator and the contents of the indicated input line,
d) permutation of the bits produced by masking
e) execution of a logic OR-function with the preceding result
f) storage of the result in a buffer register.

3. A method for the encryption of binary data, utilizing extraction of a secret key on which an irregular permutation is performed on the basis of a correspondence table, characterized in that the irregular permutation is performed by means of a method as claimed in Claim 1 or 2.

4. The use of smart card protected by encryption utilizing the DES system, comprising a microprocessor assembly provided with a read-only memory containing instructions enabling the execution of a permutation of bits in order to execute the encryption method claimed in Claim 3.
